# EUROPEAN PATENT SPECIFICATION

(11) **EP 2 482 016 B1**
(45) Date of publication and mention of the grant of the patent: **10.04.2019**
(21) Application number: 11152172.0
(22) Date of filing: 26.01.2011
(51) Int. Cl.: F25J 3/02, F25J 3/06

(54) **Method for expanding a gas stream comprising carbon dioxide and an oxy-combustion power plant with an arrangement for expanding a gas stream comprising carbon dioxide**
Verfahren zur Entspannung eines Gasstroms, der Kohlendioxid umfasst und Oxyfuel-Kraftwerk mit einer Anordnung zur Entspannung eines Gasstroms, der Kohlendioxid umfasst
Procédé pour détendre un flux gazeux comprenant du dioxyde de carbone et centrale électrique à oxy-combustion avec un arrangement pour détendre un flux gazeux comprenant du dioxyde de carbone

(43) Date of publication of application: 01.08.2012
(73) Proprietor: General Electric Technology GmbH, 5400 Baden (CH)
(72) Inventor: Stallmann, Olaf, 55270 Essenheim (DE)
(74) Representative: General Electric Technology GmbH

(56) References cited:
- EP-A2- 1 031 803
- DE-A1- 3 639 555
- JP-A- 5 064 722
- US-A- 3 355 901
- US-A- 3 614 872
- US-A1- 2008 196 584
- US-A1- 2010 251 766

## Description

### Technical Field

The present invention relates to a method for expanding a CO₂ lean gas stream comprising residual carbon dioxide (CO₂), as well as to an oxy-combustion power plant, comprising an arrangement for expanding a CO₂ lean gas stream comprising residual CO₂.

### Background

Most of the energy used in the world today is derived from the combustion of carbon and hydrogen containing fuels such as coal, oil and natural gas, as well as other organic fuels. Such combustion generates flue gases containing high levels of carbon dioxide. Due to the concerns about global warming, there is an increasing demand for the reduction of emissions of carbon dioxide to the atmosphere, why methods have been developed to remove the carbon dioxide from flue gases before the gas is released to the atmosphere.

Prior to carbon dioxide separation, the flue gas may be cleaned from other constituents and air pollutants, such as particles, SOₓ, NOₓ, mercury and water.

The CO₂ may be separated from the flue gas at high pressure and low temperature to form liquid or solid CO₂ in purified form.

In order to reduce the amount of flue gas, and thus the dimensions of a power plant and its gas cleaning arrangements, as well as to facilitate the purification and removal of carbon dioxide, oxygen may be used instead of air in a combustion furnace, generating a flue gas with a high carbon dioxide concentration and a low nitrogen concentration. The oxygen may be obtained from separating air into an oxygen stream and a nitrogen stream by means of an air separation unit (ASU).

The gas remaining after all cleaning steps and CO₂ separation, which may comprise e.g. nitrogen, oxygen and argon, may be vented to the atmosphere. If the CO₂ separation is performed at reduced temperature and elevated pressure, the vent gas will also have reduced temperature and elevated pressure when formed.

US 2008/0196584 A1 and JP 05-064722 disclose methods of removing carbon dioxide from a flue gas wherein the pressure of the CO₂ lean gas after the purification step is reduced in an expander.

### Summary

The invention is defined by the appended independent claims 1 and 10.

A pressure controller may e.g. be configured to maintain a predetermined pressure at a specific section of the gas stream, by acting on e.g. an in-stream valve or guide vanes of an expander. The temperature of the CO₂ lean gas stream may depend on the pressure of the gas stream, but also on e.g. the temperature of the process gas and the composition of the gas stream, why the temperature of any specific section of the gas stream may vary over time even if the pressure is kept constant by means of the pressure controller.

At low temperatures, typically from about -55°C to -57°C, the residual CO₂ of the gas stream may deposit solid CO₂, which may be undesirable since solid CO₂ may clog and/or erode piping, heat exchangers, expanders etc. through which the gas stream flows.

By enabling overriding of the pressure controller, the pressure of the gas stream section may be raised above the predetermined pressure maintained by the pressure controller when the temperature at that section has become too low, i.e. when the temperature is below the predetermined minimum temperature for said section. This may be regarded as a low temperature override (LTO) and may e.g. be implemented by means of a temperature monitor, such as a temperature sensor or detector that detects the temperature of the gas stream at a specific in-stream position, and an automatic override unit which determines whether the detected temperature is below the predefined minimum temperature of that position and which is able to act to override the pressure controller such that the pressure, and thus the temperature, is raised to avoid formation of solid CO₂.

It may not be possible to avoid all formation of solid CO₂, but at least some solid CO₂ formation is avoided. Thus, energy recovery and stable operation of the arrangement may be facilitated and the maintenance requirement reduced.

By directly affecting the pressure, and thus the temperature, at the same section, or position, as where the temperature is monitored, and not e.g. trying to affect the temperature or pressure further upstream, the arrangement is quick to react to a temperature change and formation of solid CO₂ may be avoided to a higher degree.

### Brief Description of the Drawings

Currently preferred embodiments will below be discussed with reference to the drawings, in which:
Fig 1 is a schematic diagram of an embodiment of an arrangement in accordance with the present disclosure.
Fig 2 is a schematic block diagram illustrating an embodiment of a method in accordance with the present disclosure.

### Detailed Description of Exemplary Embodiments

The process gas may be any type of process gas containing carbon dioxide, in the form of flue gas from any combustion device such as furnaces, process heaters, incinerators, package boilers, and power plant boilers.

The arrangement, system and power plant of the present disclosure comprises piping that connects their different parts and is arranged to allow respective fluids to flow through the apparatus/system/power plant as needed. The piping may comprise conduits, valves, pumps, compressors, fans, expanders, nozzles, heat exchangers etc. as appropriate to control the flow and properties of respective fluids.

The CO₂ may be removed from the process gas by means of any suitable CO₂ removal unit. The removal may be by means of e.g. aminated or ammoniated solutions for absorption of the CO₂ from the process gas, or by liquefaction or anti-sublimation (deposition) of the CO₂ in the process gas at reduced temperature and/or elevated pressure.

The monitoring of a temperature of the CO₂ lean gas stream may be performed by means of any suitable temperature monitor, detector, sensor or measurement equipment able to detect or monitor the temperature of the gas stream at a specific position in the gas stream.

The controlling of a pressure of the CO₂ lean gas stream may be performed by means of any suitable pressure controller. The pressure controller may comprise a pressure detector or sensor. The pressure controller is configured to maintain a predetermined pressure at a specific section of the gas stream, by acting on e.g. an in-stream valve or guide vanes of an expander. Normally, a predetermined and relatively constant pressure at each section of the gas stream is desired in order to facilitate stable operations. However, in accordance with the present disclosure, the pressure controller for a section of the gas stream is overridden if the temperature drops too low in that section. The temperature is considered too low when there is an increased risk of formation of solid CO₂.

Overriding a pressure controller may be performed by means of any suitable override unit, such as an automatic override unit or function, able to override the pressure controller to e.g. raise the pressure above the predetermined pressure associated with the pressure controller. The override unit may act to increase the pressure, and thus the temperature, by allowing guide vanes of an expander, typically a downstream expander, such as a turbine, to be adjusted, by allowing closing of a downstream valve or opening of an upstream valve and/or by allowing bypassing of an expander, typically an upstream expander. A potential problem with bypassing an expander may be that solid CO₂ may still be formed in the expander itself. Typically, it may be convenient to adjust the pressure by acting on expander guide vanes, both for the pressure controller when maintaining the predetermined pressure and when bypassing the pressure controller to raise the pressure above the predetermined pressure.

The expander, or expanders, may be any expander able to expand, and thereby reduce the pressure of, the CO₂ lean gas stream, such as an expansion valve, or a gas turbine which has the advantage of recovering energy from the compressed gas stream and thus reducing the overall energy requirement of the arrangement.

As discussed above, the CO₂ lean gas stream may have a relatively low temperature after the CO₂ removal, why it may be convenient to use the gas stream as cooling medium in heat exchange with e.g. the process gas which may need cooling in order to facilitate the CO₂ removal. The heat exchanging may take place in an indirect heat exchanger, where the CO₂ lean gas stream is kept separated from the process gas, such as plate heat exchanger or a shell and tube heat exchanger. The gas stream will also get cooled by the expansion provided by the expander why the CO₂ lean gas stream may, alternatively or additionally, be used as cooling medium for the process gas after expansion. If several expanders are used, the gas stream may be used as cooling medium before expansion in the first of the expanders, and then after each of said expanders. By using the gas stream as a cooling medium, the gas stream will be heated, thereby reducing the risk of solid CO₂ deposition.

The predefined minimum temperature anywhere within the arrangement, i.e. along the CO₂ lean gas stream may be set such that no deposition of solid CO₂ takes place in said gas stream or arrangement, or such that only an acceptable level of deposition takes place. The sublimation temperature of CO₂ in this context depends on the pressure and composition of the gas stream but is typically between -55°C and -58°C, such as between -56°C and -57°C. The predefined minimum temperature of at any temperature monitor or detector is set accordingly, typically to a temperature within the range of from -35°C to -57°C, such as from -50°C to -56°C or from -54°C to -56°C, conveniently to about -55°C. These temperatures and ranges may be applicable to any of the predefined minimum temperatures discussed herein, since the temperature is more relevant to the sublimation temperature than the pressure.

A pressure upstream of the (first) expander, and downstream of the CO₂ removal unit, may typically be within the range of 2-4 MPa (20-40 bar), such as 2.5-3.5 MPa or 2.7-3.2 MPa, e.g. about 3 MPa. The pressure may vary somewhat from the CO₂ removal unit to the (first) expander. Typically, the pressure at the outlet of the CO₂ removal unit may be between 2.8-3.5 MPa, such as 3-3.2 MPa, e.g. about 3.1 MPa (31 bar), and the temperature may be between -45°C and -56°C, such as between -50°C and -52°C; while further downstream, e.g. downstream of an expansion valve (i.e. a type of expander) controlling the CO₂ separation of the CO₂ removal unit and/or downstream a first heat exchanger for heat exchanging with the process gas, the pressure may be 2.5-3.1 MPa, such as 2.7-2.9 MPa, e.g. about 2.8 MPa (28 bar), and the temperature may be between 20°C and 30°C, such as between 23°C and 27°C, downstream the first heat exchanger, or between -50°C and -56°C, such as between -53°C and -55°C, upstream the first heat exchanger but downstream of the expansion valve.

A pressure downstream of the first expander, but upstream of any further expander, may typically be within the range of 0.1-1.5 MPa, such as 0.5-0.8 MPa or 0.6-0.7 MPa. Again, the pressure may vary somewhat from the first expander to e.g. the second expander. Typically, the pressure at the outlet of the first expander may be between 0.5-1 MPa, such as 0.6-0.8 MPa, e.g. about 0.7 MPa, and the temperature may be between -50°C and -56°C, such as between -53°C and -55°C; while further downstream, such as downstream a second heat exchanger for heat exchanging with the process gas, the pressure may be between 0.4-0.7 MPa , such as 0.5-0.7 MPa, e.g. about 0.6 MPa, and the temperature may be between 20°C and 30°C, such as between 23°C and 27°C.

If a second expander, such as a gas turbine, is used downstream of the first expander, a pressure downstream of the second turbine may typically be within the range 0.1-0.5 MPa, such as 0.1-0.3 MPa. Again, the pressure may vary somewhat downstream of the second expander depending on how far downstream one measures the pressure of the gas stream. Typically, the pressure at the outlet of the second expander may be between 0.1 and 0.3 MPa, and the temperature may be between -50°C and -56°C, such as between -53°C and -55°C; whereas the pressure further downstream, e.g. downstream a third heat exchanger for exchanging heat with the process gas, may be between 0.08-0.2 MPa, such as 0.1-0.15 MPa, e.g. ambient or atmospheric pressure, and the temperature may be between 20°C and 30°C, such as between 23°C and 27°C.

A single or a plurality of pressure controllers may be used. Typical positions for a pressure controller includes: upstream, and in close proximity of, the (first) expander, and thus downstream of the CO₂ removal unit; downstream of the (first) expander, possibly upstream, and in close proximity of, a second expander, if a second expander is used; and downstream of the optional second expander, possibly in close proximity to a place where the gas stream is vented to the atmosphere.

Similarly, a single or a plurality of temperature monitors/detectors may be used. Typical positions for a temperature monitor includes: downstream, and in close proximity of, the CO₂ removal unit, and thus upstream of the first expander; downstream, and in close proximity of, the first expander, and thus upstream of any optional second expander; and downstream, and in close proximity of, the optional second expander.

Thus, if a second expander is used, the method may further comprise: monitoring a temperature of the gas stream downstream of the second expander; and controlling a pressure of the gas stream downstream of the second expander by means of a third pressure controller. Further, the method may comprise overriding the third pressure controller when the temperature downstream of the second expander is below a third predefined minimum temperature.

Analogously, the arrangement may further comprise: means for monitoring a temperature of the gas stream downstream of the second expander (such as a temperature monitor/detector as discussed above); and means for controlling a pressure of the gas stream downstream of the second expander by means of a third pressure controller; and optionally means for overriding the third pressure controller when the temperature downstream of the second expander is below a third predefined minimum temperature (such as an override unit as discussed above).

Further expander(s) may be used, such as a third expander positioned in-stream between the first and second expanders discussed above, such that the CO₂ lean gas stream sequentially passes through the first, third and second expanders.

After the gas stream has passed through the expander(s), it may be vented to the atmosphere. It may be convenient if the gas stream has been expanded to ambient/atmospheric pressure before it is vented since the expansion may be used for energy recovery, e.g. in gas turbine expander(s).

The CO₂ lean gas stream may conveniently comprise between 1-50 mol-% CO₂, such as between 25-33 mol-% CO₂, the remainder typically including nitrogen, oxygen and argon etc. Although the gas stream is regarded as CO₂ lean, it may contain relatively high levels of CO₂, especially if the process gas is a flue gas from an oxy-combustion power plant and the flue gas has already been cleaned from many pollutants prior to the CO₂ removal. The gas stream is, however, lean when compared with a CO₂ rich fluid stream formed by the CO₂ removed from the process gas. The CO₂ rich fluid stream may comprise at least 80 mol-% CO₂, such as at least 95 mol-% CO₂, at least 98 mol-% CO₂ or at least 99 mol-% CO₂.

The arrangement may be associated with, such as be connected to or comprised in, a gas cleaning system, the system comprising means (e.g. gas cleaning units) for removing particles, sulphur oxides, nitrogen oxides, mercury, and/or water.

The arrangement may be associated with, such as be connected to or comprised in, a power plant, e.g. an oxy-combustion power plant, such that the process gas is a flue gas of said power plant.

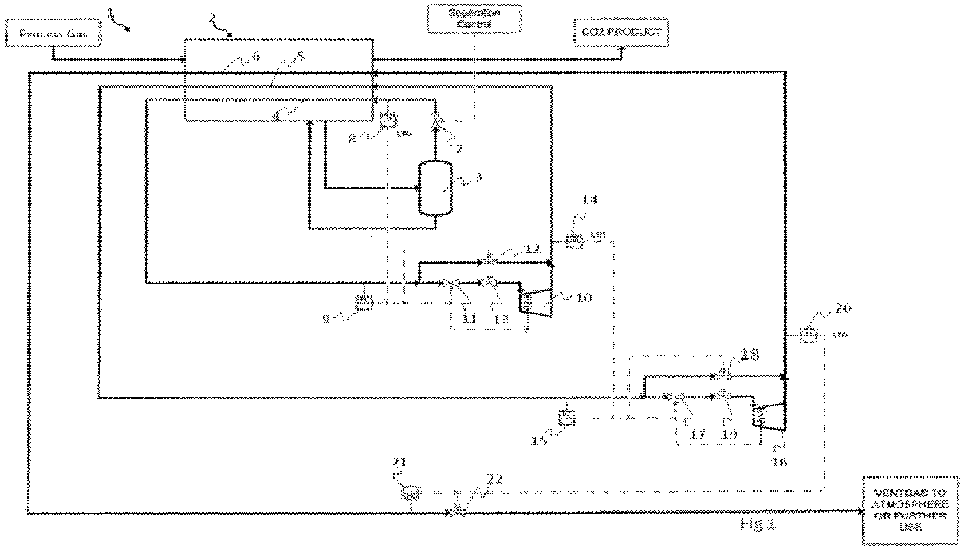

With reference to figure 1, a specific embodiment of an arrangement 1 of the present disclosure will now be discussed.

The arrangement 1 comprises a CO₂ removal unit 2 arranged to receive a process gas and removing CO₂ from said process gas to produce a CO₂ lean gas stream and a CO₂ rich fluid stream or CO₂ product. The CO₂ removal unit 2 comprises a separation unit 3 in the form of a liquefier or distillation column where the separation unit 3 is configured to, at low temperature and high pressure, separate a liquid phase (the CO₂ rich fluid stream) from a gas phase (the CO₂ lean gas stream) such that the liquid phase is allowed to leave the separation unit 3 via a liquid outlet at the bottom of the separation unit 3 and the gas phase is allowed to leave the separation unit 3 at the top of the separation unit 3. The CO₂ removal unit 2 also comprises a first heat exchanger 4, a second heat exchanger 5 and a third heat exchanger 6, all of which are configured to exchange heat between the process gas and the CO₂ lean gas stream such that the process gas is cooled and the gas stream is heated. The first heat exchanger 4 is arranged to exchange heat when the CO₂ lean gas stream has a pressure of about 2.8 MPa, the second heat exchanger 5 is arranged to exchange heat when the CO₂ lean gas stream has a pressure of about 0.6 MPa and the third heat exchanger 6 is arranged to exchange heat when the CO₂ lean gas stream has a pressure of about 0.1 MPa. The CO₂ removal unit 2 further comprises an expansion valve 7 (an expander) associated with a separation control unit, which valve 7 may be used to optimise the conditions in the separation unit 3 such that as much as possible of the CO₂ of the process gas may be removed while still forming a CO₂ fluid stream of high CO₂ purity.

A temperature monitor or detector 8 is configured to measure the temperature of the CO₂ lean gas stream in the section of the gas stream which is downstream of the expansion valve 7 and upstream of the first heat exchanger 4. The temperature detector 8 is associated with a first automatic low temperature override (LTO) function or unit which is configured to act to raise the pressure of the section if the temperature detected is below the predetermined minimum temperature of about -55°C. The LTO is configured to override the pressure controller 9 which is configured to control the pressure downstream of the first heat exchanger 4 to a predetermined pressure by acting on the guide vanes of a first gas turbine 10, a first throttle 11 and/or a first bypass valve 12. Thus, the LTO, when the temperature as detected by the temperature detector 8 is too low, overrides the pressure controller 9 such that the pressure of the CO₂ lean gas stream is raised in a section between the expansion valve 7 and the gas turbine 10 by means of the guide vanes of the first gas turbine 10, the first throttle 11 and/or the first bypass valve 12. A first safety valve 13 is arranged for emergency use if the control of the pressure fails.

The first gas turbine 10 (an expander) is configured to expand the CO₂ lean gas stream from about 2.8 MPa to about 0.7 MPa. During expansion, the gas stream, which has previously been heated by the first heat exchanger 4, will again be cooled to a temperature close to the CO₂ sublimation temperature.

Thus, a second LTO is in place downstream of the gas turbine 10. The second LTO operates in a similar manner as the first LTO discussed above, being associated with a second temperature detector 14 configured to detect the temperature of the CO₂ lean gas stream between the first gas turbine 10 and the second heat exchanger 5, and the second LTO being configured to override a second pressure controller 15 if the second temperature detector 14 detects a temperature below a second minimum temperature of -55°C. The second pressure controller 15 is configured to control the pressure downstream of the first gas turbine 10 and upstream of a second gas turbine 16 to a second predetermined pressure by acting on the guide vanes of the second gas turbine 16, a second throttle 17 and/or a second bypass valve 18. Thus, the second LTO, when the temperature as detected by the temperature detector 14 is too low, overrides the pressure controller 15 such that the pressure of the CO₂ lean gas stream is raised in a section between the first and second gas turbines 10 and 16 by means of the guide vanes of the second gas turbine 16, the second throttle 17 and/or the second bypass valve 18. A second safety valve 19 is arranged for emergency use if the control of the pressure fails.

The second gas turbine 16 (an expander) is configured to expand the CO₂ lean gas stream from about 0.6 MPa to about 0.2 MPa. During expansion the gas stream, which has previously been heated in the second heat exchanger 5, will again be cooled to a temperature close to the CO₂ sublimation temperature.

Thus, a third LTO is in place downstream of the gas turbine 16. The third LTO operates in a similar manner as the first and second LTOs discussed above, being associated with a third temperature detector 20 configured to detect the temperature of the CO₂ lean gas stream between the second gas turbine 16 and the third heat exchanger 6, and the third LTO being configured to override a third pressure controller 21 if the third temperature detector 20 detects a temperature below a third minimum temperature of -55°C. The third pressure controller 21 is configured to control the pressure downstream of the second gas turbine 16 and upstream of a third throttle 22 to a third predetermined pressure by acting on the third throttle 22. Thus, the third LTO, when the temperature as detected by the temperature detector 20 is too low, overrides the pressure controller 21 such that the pressure of the CO₂ lean gas stream is raised in a section between the second gas turbine 16 and the throttle 22 by means of the third throttle 22.

The arrangement 1 may be configured to allow the CO₂ lean gas stream to be vented to the atmosphere after passing the third throttle 22.

Typically, the lean gas stream may have a pressure of about 3.1 MPa and a temperature of about -51°C when leaving the separation unit 3, upstream the expansion valve 7; a pressure of about 2.8 MPa and a temperature of about -54°C between the expansion valve 7 and the first heat exchanger 4; a pressure of about 2.8 MPa and a temperature of about 25°C between the first heat exchanger 4 and the first gas turbine 10; a pressure of about 0.7 MPa and a temperature of about -54°C between the first gas turbine 10 and the second heat exchanger 5; a pressure of about 0.6 MPa and a temperature of about 25°C between the second heat exchanger 5 and the second gas turbine 16; a pressure of about 0.2 MPa and a temperature of about -54°C between the second gas turbine 16 and the third heat exchanger 6; and a pressure of about 0.1, i.e. close to atmospheric pressure, and a temperature of about 25°C after the third heat exchanger 6 as well as after the third throttle 22.

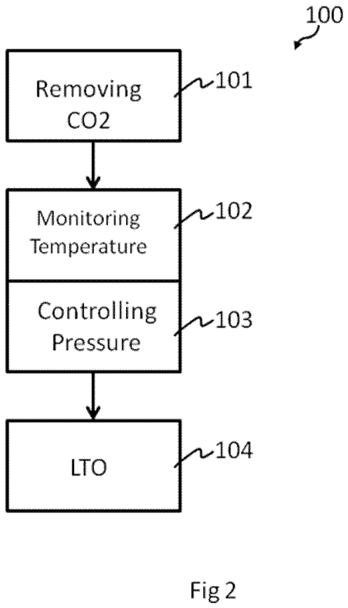

With reference primarily to figure 2, a specific method 100 in accordance with the present disclosure will now be discussed.

The method 100 comprises removing, step 101, CO₂ from a process gas, in the form of a flue gas from an oxy-combustion power plant, by means of the CO₂ removal unit 2, producing a CO₂ lean gas stream.

The temperature of the gas stream is monitored, step 102, after an expander 7, 10 or 16 (expansion leading to temperature reduction) by means of a temperature detector 8, 14 or 20, to ensure that the temperature of the gas stream does not fall below a predetermined minimum temperature. The pressure of the gas stream is controlled, step 103, after the expander by means of a pressure controller 9, 15 or 21, such that a predetermined pressure is maintained downstream of the expander. The temperature monitoring 102 and pressure controlling 103 may be performed continuously and/or concurrently. The pressure controller may comprise a pressure detector. The temperature detector may detect the temperature at the same position in the gas stream as the pressure controller/detector, or upstream or downstream of the pressure controller/detector. However, the pressure controller controls or affects the pressure at the temperature detector, and consequently the temperature detected by the temperature detector.

If the temperature detector detects that the temperature of the gas stream is below the predetermined minimum temperature, a low temperature override, step 104, is activated. The LTO overrides the pressure controller such that the pressure of the gas stream is increased above the predetermined pressure, whereby the temperature is increased where the temperature detector detects the temperature of the gas stream and formation of solid CO₂ is prevented in that section of the gas stream.

Thus, a specific embodiment of a method of the present disclosure provides a method and an arrangement for expanding a gas stream comprising carbon dioxide (CO₂) the method comprising: removing CO₂ from a process gas to produce a CO₂ lean gas stream comprising residual CO₂; monitoring a temperature of the gas stream downstream of an expander; controlling a pressure of the gas stream downstream of the expander by means of a pressure controller; and overriding the pressure controller when the temperature downstream of the expander is below a predefined minimum temperature.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode currently contemplated for carrying out this invention, but that the invention will include all embodiments falling within the scope of the appended claims. Moreover, the use of the terms first, second, etc. do not denote any order or importance or chronology, but rather the terms first, second, etc. are used to distinguish one element from another.

## Claims

1. A method (100) of expanding a CO₂ lean gas stream comprising residual carbon dioxide, CO₂, the method comprising:
removing (101) CO₂ from a process gas in the form of a flue gas from a power plant, such as an oxy-combustion power plant, to produce a CO₂ lean gas stream comprising residual CO₂; and
monitoring (102) a temperature of the gas stream upstream of an expander (10,16),
controlling (103) a pressure of the gas stream upstream of the expander (10,16) by means of a first pressure controller (9,15) configured to maintain a predetermined pressure upstream of the expander (10,16), and
overriding (104) the first pressure controller (9,15) when the temperature upstream of the expander (10,16) is below a first predefined minimum temperature; and/or
monitoring (102) a temperature of the gas stream downstream of an expander (7,10,16),
controlling (103) a pressure of the gas stream downstream of the expander (7,10,16) by means of a second pressure controller (9,15,21) configured to maintain a predetermined pressure downstream of the expander (7,10,16), and
overriding (104) the second pressure controller (9,15,21) when the temperature downstream of the expander (7,10,16) is below a second predefined minimum temperature;
whereby at least some deposition of solid CO₂ from the residual CO₂ in the gas stream is avoided.

2. The method of claim 1, wherein the first and/or second predefined minimum temperature is within the range of from -35°C to -57°C, such as from -50°C to -56°C.

3. The method of any preceding claim, wherein the pressure of the gas stream upstream of the expander (10,16) is within the range of 2-4 MPa.

4. The method of any preceding claim, wherein the pressure of the gas stream downstream of the expander (7,10,16) is within the range of 0.1-1.5 MPa, such as 0.5-0.8 MPa.

5. The method of any preceding claim, wherein the second pressure controller (9,15,21) is upstream of a second expander (10,16).

6. The method of claim 5, further comprising:
monitoring (102) a temperature of the gas stream downstream of the second expander (10,16);
controlling (103) a pressure of the gas stream downstream of the second expander (10,16) by means of a third pressure controller (15,21); and
overriding (104) the third pressure controller (15,21) when the temperature downstream of the second expander (10,16) is below a third predefined minimum temperature.

7. The method of any preceding claim, further comprising:
venting the gas stream to the atmosphere.

8. The method of any preceding claim, wherein the CO₂ lean gas stream comprises between 1-50 mol-% CO₂, such as between 25-33 mol-%.

9. The method of any preceding claim, wherein the CO₂ removed from the process gas forms a CO₂ rich fluid stream comprising at least 80 mol-% CO₂, such as at least 95 mol-% CO₂.

10. An oxy-combustion power plant comprising an arrangement (1) for expanding a gas stream comprising carbon dioxide, CO₂, the arrangement comprising:
means (2) for removing (101) CO₂ from a process gas in the form of a flue gas from the power plant to produce a CO₂ lean gas stream comprising residual CO₂;
an expander for expanding the CO₂ lean gas stream;
and
means (8,14) for monitoring (102) a temperature of the gas stream upstream of the expander (10,16),
means for controlling (103) a pressure of the gas stream upstream of the expander (10,16) by means of a first pressure controller (9,15) configured to maintain a predetermined pressure upstream of the expander (10,16), and
means for overriding (104) the first pressure controller (9,15) when the temperature upstream of the expander (10,16) is below a first predefined minimum temperature; and/or
means (8,14,20) for monitoring (102) a temperature of the gas stream downstream of the expander (7,10,16),
means for controlling (103) a pressure of the gas stream downstream of the expander (7,10,16) by means of a second pressure controller (9,15,21) configured to maintain a predetermined pressure downstream of the expander (7,10,16), and
means for overriding (104) the second pressure controller (9,15,21) when the temperature downstream of the expander (7,10,16) is below a second predefined minimum temperature;
such that the arrangement (1) is configured to avoid at least some deposition of solid CO₂ from the residual CO₂ in the gas stream.

11. The oxy-combustion power plant of claim 10, wherein the arrangement (1) further comprises a gas cleaning system, the system comprising means for removing particles, sulphur oxides, nitrogen oxides, mercury, and/or water.

## Patentansprüche

1. Verfahren (100) zum Expandieren eines CO₂-armen Gasstroms, der restliches Kohlendioxid, CO₂, umfasst, wobei das Verfahren umfasst:
Entfernen (101) von CO₂ von einem Prozessgas in der Form eines Rauchgases von einem Kraftwerk, wie beispielsweise einem Oxy-Verbrennungskraftwerk, um einen CO₂-armen Gasstrom, der restliches CO₂ umfasst, herzustellen; und
Überwachen (102) einer Temperatur des Gasstroms stromaufwärts eines Expanders (10, 16),
Steuern (103) eines Drucks des Gasstroms stromaufwärts des Expanders (10, 16) mittels einer ersten Drucksteuerung (9, 15), die konfiguriert ist, um einen vorbestimmten Druck stromaufwärts des Expanders (10, 16) aufrechtzuerhalten, und
Überschreiben (104) der ersten Drucksteuerung (9, 15), wenn die Temperatur stromaufwärts des Expanders (10, 16) unterhalb einer ersten vordefinierten minimalen Temperatur liegt; und/oder
Überwachen (102) einer Temperatur des Gasstroms stromabwärts eines Expanders (7, 10, 16),
Steuern (103) eines Drucks des Gasstroms stromabwärts des Expanders (7, 10, 16) mittels einer zweiten Drucksteuerung (9, 15, 21), die konfiguriert ist, um einen vorbestimmten Druck stromabwärts des Expanders (7, 10, 16) aufrechtzuerhalten, und
Überschreiben (104) der zweiten Drucksteuerung (9, 15, 21), wenn die Temperatur stromabwärts des Expanders (7,10, 16) unterhalb einer zweiten vordefinierten minimalen Temperatur liegt;
wodurch zumindest eine gewisse Ablagerung von festem CO₂ aus dem restlichen CO₂ in dem Gasstrom vermieden wird.

2. Verfahren nach Anspruch 1, wobei die erste und/oder die zweite vordefinierte minimale Temperatur innerhalb des Bereichs von -35°C bis -57°C, wie beispielsweise von -50°C bis -56°C liegt.

3. Verfahren nach einem vorstehenden Anspruch, wobei der Druck des Gasstroms stromaufwärts des Expanders (10, 16) innerhalb des Bereichs von 2-4 MPa liegt.

4. Verfahren nach einem vorstehenden Anspruch, wobei der Druck des Gasstroms stromabwärts des Expanders (7, 10, 16) innerhalb des Bereichs von 0,1-1,5 MPa, wie beispielsweise 0,5-0,8 liegt.

5. Verfahren nach einem vorstehenden Anspruch, wobei sich die zweite Drucksteuerung (9, 15, 21) stromaufwärts eines zweiten Expanders (10, 16) befindet.

6. Verfahren nach Anspruch 5, weiter umfassend:
Überwachen (102) einer Temperatur des Gasstroms stromabwärts des zweiten Expanders (10, 16);
Steuern (103) eines Drucks des Gasstroms stromabwärts des zweiten Expanders (10, 16) mittels einer dritten Drucksteuerung (15, 21); und
Überschreiben (104) der dritten Drucksteuerung (15, 21), wenn die Temperatur stromabwärts des zweiten Expanders (10, 16) unterhalb einer dritten vordefinierten minimalen Temperatur liegt.

7. Verfahren nach einem vorstehenden Anspruch, weiter umfassend:
Entlüften des Gasstroms in die Atmosphäre.

8. Verfahren nach einem vorstehenden Anspruch, wobei der CO₂-arme Gasstrom zwischen 1-50 Mol-% CO₂, wie beispielsweise zwischen 25-33 Mol-%, umfasst.

9. Verfahren nach einem vorstehenden Anspruch, wobei das von dem Prozessgas entfernte CO₂ einen CO₂-reichen Fluidstrom bildet, der zumindest 80 Mol-% CO₂, wie beispielsweise zumindest 95 Mol-% CO₂, umfasst.

10. Oxy-Verbrennungskraftwerk, umfassend eine Anordnung (1) zum Expandieren eines Gasstroms, der Kohlendioxid, CO₂, umfasst, wobei die Anordnung umfasst:
Mittel (2) zum Entfernen (101) von CO₂ von einem Prozessgas in der Form eines Rauchgases von dem Kraftwerk, um einen CO₂-armen Gasstrom, der restliches CO₂ umfasst, herzustellen;
einen Expander zum Expandieren des CO₂-armen Gasstroms; und
Mittel (8, 14) zum Überwachen (102) einer Temperatur des Gasstroms stromaufwärts des Expanders (10, 16),
Mittel zum Steuern (103) eines Drucks des Gasstroms stromaufwärts des Expanders (10, 16) mittels einer ersten Drucksteuerung (9, 15), die konfiguriert ist, um einen vorbestimmten Druck stromaufwärts des Expanders (10, 16) aufrechtzuerhalten, und
Mittel zum Überschreiben (104) der ersten Drucksteuerung (9, 15), wenn die Temperatur stromaufwärts des Expanders (10, 16) unterhalb einer ersten vordefinierten minimalen Temperatur liegt; und/oder
Mittel (8, 14, 20) zum Überwachen (102) einer Temperatur des Gasstroms stromabwärts des Expanders (7, 10, 16),
Mittel zum Steuern (103) eines Drucks des Gasstroms stromabwärts des Expanders (7, 10, 16) mittels einer zweiten Drucksteuerung (9, 15, 21), die konfiguriert ist, um einen vorbestimmten Druck stromabwärts des Expanders (7, 10, 16) aufrechtzuerhalten, und
Mittel zum Überschreiben (104) der zweiten Drucksteuerung (9, 15, 21), wenn die Temperatur stromabwärts des Expanders (7, 10, 16) unterhalb einer zweiten vordefinierten minimalen Temperatur liegt;
sodass die Anordnung (1) konfiguriert ist, um zumindest eine gewisse Ablagerung von festem CO₂ aus dem restlichen CO₂ in dem Gasstrom zu vermeiden.

11. Oxy-Verbrennungskraftwerk nach Anspruch 10, wobei die Anordnung (1) weiter ein Gasreinigungssystem umfasst, wobei das System Mittel zum Entfernen von Partikeln, Schwefeloxiden, Stickoxiden, Quecksilber und/oder Wasser umfasst.

## Revendications

1. Procédé (100) de détente d'un flux gazeux pauvre en CO₂ comprenant du dioxyde de carbone résiduel, CO₂, le procédé comprenant :
le retrait (101) de CO₂ d'un gaz de procédé sous la forme d'un gaz de combustion provenant d'une centrale électrique, telle qu'une centrale électrique à oxy-combustion, pour produire un flux gazeux pauvre en CO₂ comprenant du CO₂ résiduel ; et
le contrôle (102) d'une température du flux gazeux en amont d'un détendeur (10, 16),
la commande (103) d'une pression du flux gazeux en amont du détendeur (10, 16) au moyen d'un premier dispositif de commande de pression (9, 15) configuré pour maintenir une pression prédéterminée en amont du détendeur (10, 16), et
le surpassement (104) du premier dispositif de commande de pression (9, 15) lorsque la température en amont du détendeur (10, 16) est inférieure à une première température minimale prédéterminée ; et/ou
le contrôle (102) d'une température du flux gazeux en aval d'un détendeur (7, 10, 16),
la commande (103) d'une pression du flux gazeux en aval du détendeur (7, 10, 16) au moyen d'un deuxième dispositif de commande de pression (9, 15, 21) configuré pour maintenir une pression prédéterminée en aval du détendeur (7, 10, 16), et
le surpassement (104) du deuxième dispositif de commande de pression (9, 15, 21) lorsque la température en aval du détendeur (7, 10, 16) est inférieure à une deuxième température minimale prédéfinie ;
selon lequel au moins un certain dépôt de CO₂ solide à partir du CO₂ résiduel dans le flux gazeux est évité.

2. Procédé selon la revendication 1, dans lequel la première et/ou deuxième température minimale prédéfinie est dans la plage de -35°C à -57°C, par exemple de -50°C à -56°C.

3. Procédé selon une quelconque revendication précédente, dans lequel la pression du flux gazeux en amont du détendeur (10, 16) est dans la plage de 2 à 4 MPa.

4. Procédé selon une quelconque revendication précédente, dans lequel la pression du flux gazeux en aval du détendeur (7, 10, 16) est dans la plage de 0,1 à 1,5 MPa, par exemple de 0,5 à 0,8 MPa.

5. Procédé selon une quelconque revendication précédente, dans lequel le deuxième dispositif de commande de pression (9, 15, 21) est en amont d'un second détendeur (10, 16).

6. Procédé selon la revendication 5, comprenant en outre :
le contrôle (102) d'une température du flux gazeux en aval du second détendeur (10, 16) ;
la commande (103) d'une pression du flux gazeux en aval du second détendeur (10, 16) au moyen d'un troisième dispositif de commande de pression (15, 21) ; et
le surpassement (104) du troisième dispositif de commande de pression (15, 21) lorsque la température en aval du second détendeur (10, 16) est inférieure à une troisième température minimale prédéfinie.

7. Procédé selon une quelconque revendication précédente, comprenant en outre :
la mise à l'air libre du flux gazeux dans l'atmosphère.

8. Procédé selon une quelconque revendication précédente, dans lequel le flux gazeux pauvre en CO₂ comprend entre 1 et 50 % mol de CO₂, par exemple entre 25 et 33 % mol.

9. Procédé selon une quelconque revendication précédente, dans lequel le CO₂ retiré du gaz de procédé forme un flux de fluide riche en CO₂ comprenant au moins 80 % mol de CO₂, par exemple au moins 95 % mol de CO₂.

10. Centrale électrique à oxy-combustion comprenant un agencement (1) pour détendre un flux gazeux comprenant du dioxyde de carbone, CO₂, l'agencement comprenant :
des moyens (2) pour retirer (101) du CO₂ d'un gaz de procédé sous la forme d'un gaz de combustion de la centrale électrique pour produire un flux gazeux pauvre en CO₂ comprenant du CO₂ résiduel ;
un détendeur pour détendre le flux gazeux pauvre en CO₂ ;
et
des moyens (8, 14) pour contrôler (102) une température du flux gazeux en amont du détendeur (10, 16),
des moyens pour commander (103) une pression du flux gazeux en amont du détendeur (10, 16) au moyen d'un premier dispositif de commande de pression (9, 15) configuré pour maintenir une pression prédéterminée en amont du détendeur (10, 16), et
des moyens pour surpasser (104) le premier dispositif de commande de pression (9, 15) lorsque la température en amont du détendeur (10, 16) est inférieure à une première température minimale prédéfinie ; et/ou
des moyens (8, 14, 20) pour contrôler (102) une température du flux gazeux en aval du détendeur (7, 10, 16),
des moyens pour commander (103) une pression du flux gazeux en aval du détendeur (7, 10, 16) au moyen d'un deuxième dispositif de commande de pression (9, 15, 21) configuré pour maintenir une pression prédéterminée en aval du détendeur (7, 10, 16), et
des moyens pour surpasser (104) le deuxième dispositif de commande de pression (9, 15, 21) lorsque la température en aval du détendeur (7, 10, 16) est inférieure à une deuxième température minimale prédéfinie ;
de sorte que l'agencement (1) est configuré pour éviter au moins un certain dépôt de CO₂ solide du CO₂ résiduel dans le flux gazeux.

11. Centrale électrique à oxy-combustion selon la revendication 10, dans lequel l'agencement (1) comprend en outre un système de nettoyage de gaz, le système comprenant des moyens pour retirer des particules, des oxydes de soufre, des oxydes d'azote, du mercure, et/ou de l'eau.
